# EUROPEAN PATENT APPLICATION

(11) **EP 4 761 342 A1**
(43) Date of publication of application: **17.06.2026**
(21) Application number: 24851349.1
(22) Date of filing: 20.05.2024
(51) Int. Cl.: H04W 24/10, H04W 72/231, H04W 72/232, H04W 72/0446

(54) **TERMINAL, BASE STATION, AND COMMUNICATION METHOD**

(30) Priority: 07.08.2023 JP 2023128367
(71) Applicant: Panasonic Intellectual Property Corporation of America, Torrance, CA 90504 (US)
(72) Inventor: INOUE, Tomohiro, Kadoma-shi, Osaka 571-0057 (JP); SUZUKI, Hidetoshi, Kadoma-shi, Osaka 571-0057 (JP); YAMAMOTO, Tetsuya, Kadoma-shi, Osaka 571-0057 (JP); NUNOME, Tomoya, Kadoma-shi, Osaka 571-0057 (JP); IWAI, Takashi, Kadoma-shi, Osaka 571-0057 (JP); HORIUCHI, Ayako, Kadoma-shi, Osaka 571-0057 (JP); NISHIO, Akihiko, Kadoma-shi, Osaka 571-0057 (JP)
(74) Representative: Grünecker Patent- und Rechtsanwälte PartG mbB
(86) International application number: PCT/JP2024/018461
(87) International publication number: WO 2025/032915

(57) **Abstract**

The present invention appropriately reports interference between terminals. A terminal according to the present invention comprises: a control circuit that determines, on the basis of a method different from a method for triggering aperiodic measurement of cross-link interference, a resource used for aperiodic reporting of cross-link interference between terminals; and a transmission circuit that transmits a report using the resource.

## Description

### Technical Field

The present disclosure relates to a terminal, a base station, and a communication method.

### Background Art

The specification of a physical layer for Release 17 new radio access technology (NR) has been completed as functional extension of the 5th generation mobile communication systems (5G) in the 3rd generation partnership project (3GPP). NR supports functions for realizing Ultra Reliable and Low Latency Communication (URLLC) in addition to enhanced Mobile Broadband (eMBB) to meet requirements such as high speed and large capacity (see, e.g., Non-Patent Literature (hereinafter, referred to as NPL) 1 to NPL 6).

### Citation List

### Non-Patent Document

NPL 1
   3GPP TS 38.211 V17.5.0, "NR; Physical channels and modulation (Release 17)," Jun. 2023
NPL 2
   3GPP TS 38.212 V17.5.0, "NR; Multiplexing and channel coding (Release 17)," Mar. 2023
NPL 3
   3GPP TS 38.213 V17.6.0, "NR; Physical layer procedure for control (Release 17)," Jun. 2023
NPL 4
   3GPP TS 38.214 V17.6.0, "NR; Physical layer procedures for data (Release 17)," Jun. 2023
NPL 5
   3GPP TS 38.215 V17.3.0, "NR; Physical layer measurements (Release 17)," Mar. 2023
NPL 6
   3GPP TS 38.331 V17.5.0, "NR; Radio Resource Control (RRC) protocol specification (Release 17)", July 2023

### Summary of Invention

However, there is room for discussion on a method of reporting interference between terminals.

One non-limiting exemplary embodiment of the present disclosure facilitates providing a terminal, a base station, and a communication method each capable of appropriately reporting interference between terminals.

A terminal according to one exemplary embodiment of the present disclosure includes: control circuitry, which, in operation, determines a resource used for an aperiodic report of a cross-link interference between terminals based on a method different from a method of triggering aperiodic measurement of the cross-link interference; and transmission circuitry, which, in operation, transmits the report by using the resource.

It should be noted that general or specific embodiments may be implemented as a system, an apparatus, a method, an integrated circuit, a computer program, a storage medium, or any selective combination thereof.

According to an embodiment of the present disclosure, interference between terminals can be appropriately reported.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an exemplary subband non-overlapping full duplex (SBFD) operation;
FIG. 2 is a diagram illustrating an exemplary Dynamic/flexible time division duplex (TDD) operation;
FIG. 3 is a diagram illustrating an exemplary cross-link interference (CLI) between terminals;
FIG. 4 is a diagram illustrating an exemplary trigger method of aperiodic channel state information (CSI) measurement and report;
FIG. 5 is a diagram illustrating an exemplary trigger method of aperiodic CLI measurement;
FIG. 6 is a diagram illustrating an exemplary trigger method of aperiodic CLI measurement;
FIG. 7 is a diagram illustrating an exemplary trigger method of aperiodic CLI measurement;
FIG. 8 is a block diagram illustrating a configuration example of a part of a base station;
FIG. 9 is a block diagram illustrating a configuration example of a part of a terminal;
FIG. 10 is a block diagram illustrating a configuration example of the base station;
FIG. 11 is a block diagram illustrating a configuration example of the terminal;
FIG. 12 is a sequence diagram illustrating operation examples of a base station and a terminal;
FIG. 13 is a diagram illustrating an exemplary report method of an aperiodic terminal-to-terminal CLI;
FIG. 14 is a diagram illustrating an exemplary report method of an aperiodic terminal-to-terminal CLI;
FIG. 15 is a diagram illustrating an exemplary report method of an aperiodic terminal-to-terminal CLI;
FIG. 16 is a diagram illustrating an exemplary report method of an aperiodic terminal-to-terminal CLI;
FIG. 17 is a diagram illustrating an exemplary report method of an aperiodic terminal-to-terminal CLI;
FIG. 18 is a diagram illustrating an exemplary report method of an aperiodic terminal-to-terminal CLI; and
FIG. 19 is a diagram of an exemplary architecture of a 3GPP NR system.
FIG. 20 schematically illustrates a functional split between Next Generation - Radio Access Network (NG-RAN) and 5th Generation Core (5GC);
FIG. 21 is a sequence diagram of a Radio Resource Control (RRC) connection setup/reconfiguration procedure;
FIG. 22 schematically illustrates usage scenarios of enhanced Mobile Broadband (eMBB) massive Machine Type Communications (mMTC), and Ultra Reliable and Low Latency Communications (URLLC); and
FIG. 23 is a block diagram illustrating an exemplary 5G system architecture for a non-roaming scenario.

### Description of Embodiments

Hereinafter, embodiments of the present disclosure will be described in detail with reference to the accompanying drawings.

### [Regarding subband non-overlapping full duplex (SBFD) and Dynamic/flexible time division duplex (TDD)]

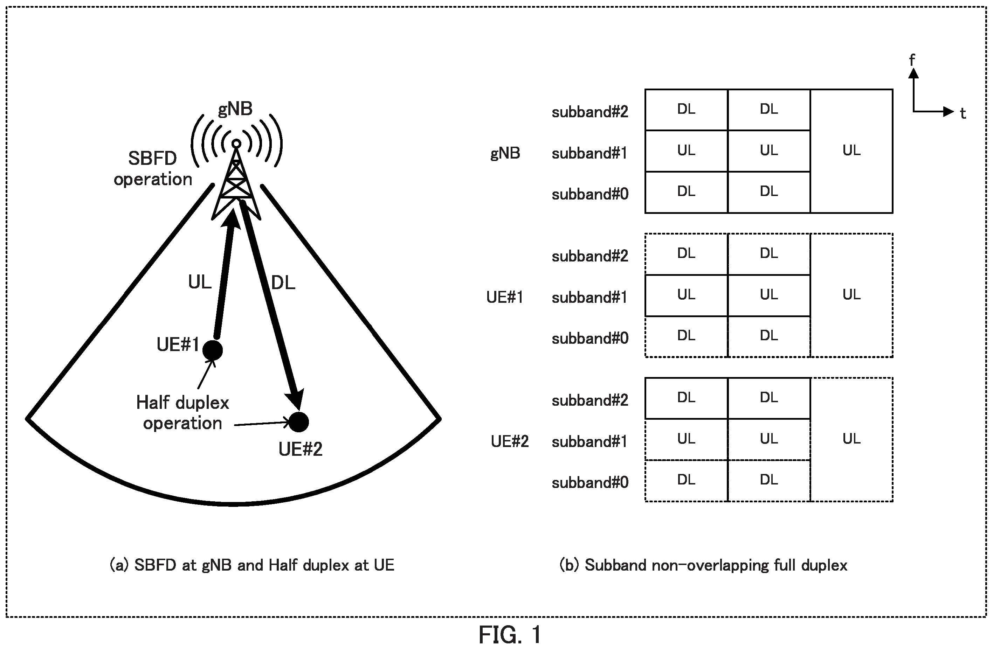

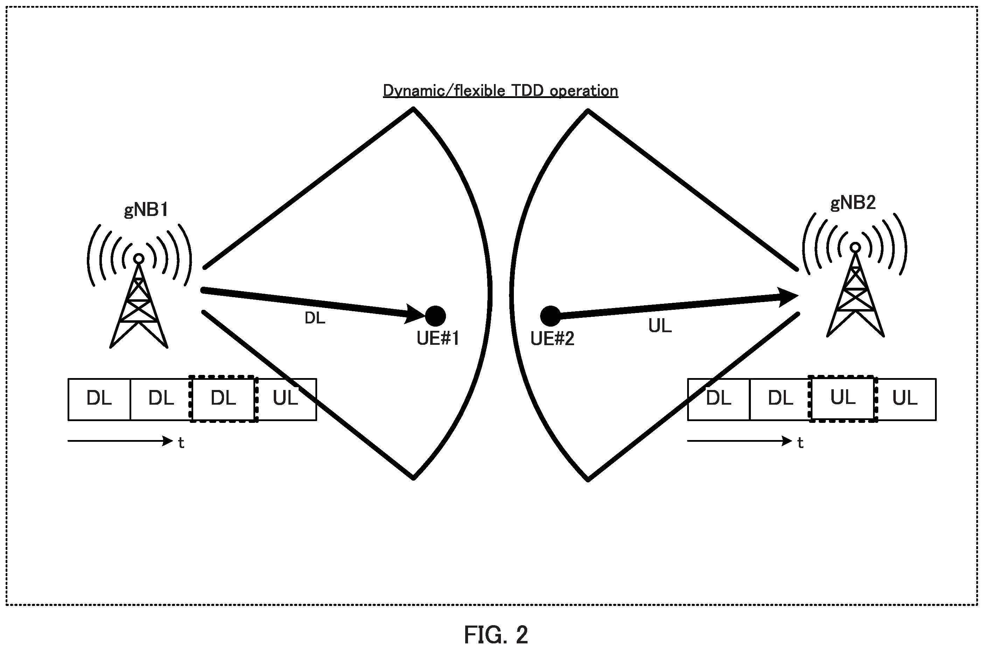

In Release 18, subband non-overlapping full duplex (SBFD) and Dynamic/flexible TDD have been discussed. FIG. 1 illustrates an exemplary SBFD, and FIG. 2 illustrates an exemplary Dynamic/flexible TDD.

In FIG. 1, (a) illustrates exemplary operations of a base station (also referred to as gNB) and terminals (each also referred to as User Equipment (UE) (e.g., UE #1 and UE #2) in the same cell in an SBFD operation. In the SBFD operation, the base station performs an SBFD operation, and the terminals perform Half duplex operations.

In FIG. 1, (b) illustrates exemplary allocation of subbands in an SBFD operation. In (b) of FIG. 1, the vertical axis represents frequency, and the horizontal axis represents time. In (b) of FIG. 1, "UL" refers to Uplink transmission, and "DL" refers to Downlink transmission. Further, resources that are not used in each device (e.g., gNB, UE #1, and UE #2) are indicated by dotted lines.

As illustrated in (b) of FIG. 1, in SBFD, a frequency resource (frequency band) is divided into a plurality of subbands (or each also referred to as a band, RB set, or sub Bandwidth part (BWP)), and transmissions in different directions in units of subbands are supported. As illustrated in (b) of FIG. 1, the base station can perform transmission and reception (e.g., SBFD operation) in uplink and downlink simultaneously, and the terminal can perform transmission and reception (e.g., Half duplex operation) in either uplink or downlink in a certain time resource. For example, in (b) of FIG. 1, UE #1 communicates with the base station in uplink and UE #2 communicates with the base station in downlink in the same time resource (e.g., slot or symbol).

FIG. 2 illustrates an operation example of different base stations (e.g., gNB1 and gNB2) and terminals (e.g., UE #1 and UE #2) in dynamic/flexible TDD operation. In a Dynamic/flexible TDD operation, base stations and terminals may perform Half duplex operations and transmission directions in different base stations are possibly different from each other.

In the example of FIG. 2, at the same time resource (e.g., slot or symbol at the same time point), gNB1 performs DL transmission to UE #1, and gNB2 performs UL reception from UE #2.

### [Regarding Interference]

In the case of a Dynamic/flexible TDD operation, various types of interference possibly occur. For example, cross-link interference (CLI) between terminals (UE-to-UE) and CLI between base stations (gNB-to-gNB) possibly occur. Since CLI between terminals and CLI between base stations greatly deteriorate reception performance, a countermeasure is required.

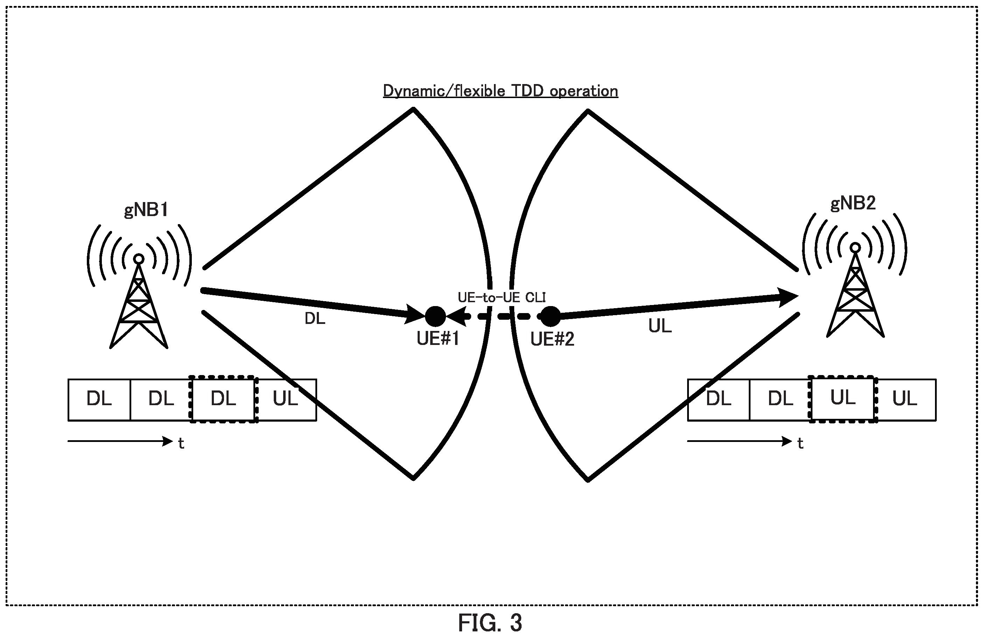

For example, in the Dynamic/flexible TDD operation, as illustrated in FIG. 3, different base stations may perform communication in different directions at the same time. In this case, since the terminal (in FIG. 3, UE #1) that performs DL reception may receive CLI from the terminal (in FIG. 3, UE #2) that performs UL transmission, the reception performance of DL in the terminal (UE #1) that performs DL reception is possibly deteriorated.

In the following, regarding CLI between terminals, a terminal that causes interference is also referred to as an "aggressor UE", and a terminal that receives interference is also referred to as a "victim UE".

Examples of a method of avoiding such interference include a method in which the victim UE measures a terminal-to-terminal CLI, reports the measurement result to the base station, and the base station avoids terminal-to-terminal CLI by scheduling or the like based on the measurement result. For example, in the scheduling, the base station may assign the DL reception of the victim UE to a time resource different from the UL transmission of the aggressor UE.

### [CLI Measurement Method]

A method of measuring terminal-to-terminal CLI will be described.

For example, the aggressor UE transmits a reference signal (sounding reference signal (SRS)) or a UL channel for CLI measurement, and the victim UE receives the SRS or the UL channel and performs CLI measurement. In this case, in order for the victim UE to know (or receive) a configuration of the reference signal or the UL channel for CLI measurement from the aggressor UE, for example, the base station may share (or indicate or configure) information on the SRS or the UL channel for CLI measurement with the terminal in advance.

Examples of the measurement value of the CLI include reference signal received power (SRS-RSRP) or received signal strength indicator (CLI-RSSI). The SRS-RSRP is a value of the received power of the SRS measured by the terminal receiving the SRS transmitted from another terminal. Further, the CLI-RSSI is a linear average value of the total received power measured in a measurement resource configured for the terminal.

For example, the aggressor UE transmits SRS, and the victim UE receives the SRS transmitted from the aggressor UE and measures SRS-RSRP. The victim UE reports a plurality of SRS-RSRPs to the base station.

In Release 16, layer-3 based terminal-to-terminal CLI measurement and report are supported. For example, layer-1 or layer-2 based terminal-to-terminal CLI measurement and report may also be assumed. For example, in the layer-1 based terminal-to-terminal CLI measurement and report, the measurement value of the CLI may be reported to the base station by uplink control information (e.g., uplink control information (UCI)) without being averaged. Further, regarding the operation of the CLI measurement and report in the time direction, periodic, semi-persistent, or aperiodic measurement and report are assumed.

For example, studies have not been sufficiently carried out on a report method (e.g., scheduling method) of the measurement value related to the aperiodic terminal-to-terminal CLI measurement triggered by downlink control information unique to the terminal (UE) (UE-specific downlink control information (DCI)) or downlink control information common to a plurality of terminals (e.g., a group) (group common DCI).

In one non-limiting exemplary embodiment of the present disclosure, a report method of a measurement value related to an aperiodic terminal-to-terminal CLI measurement triggered by UE-specific DCI or group common DCI will be described.

### [Aperiodic Channel State Information (CSI) Measurement and Report]

An example of the existing aperiodic CSI measurement and report will be described.

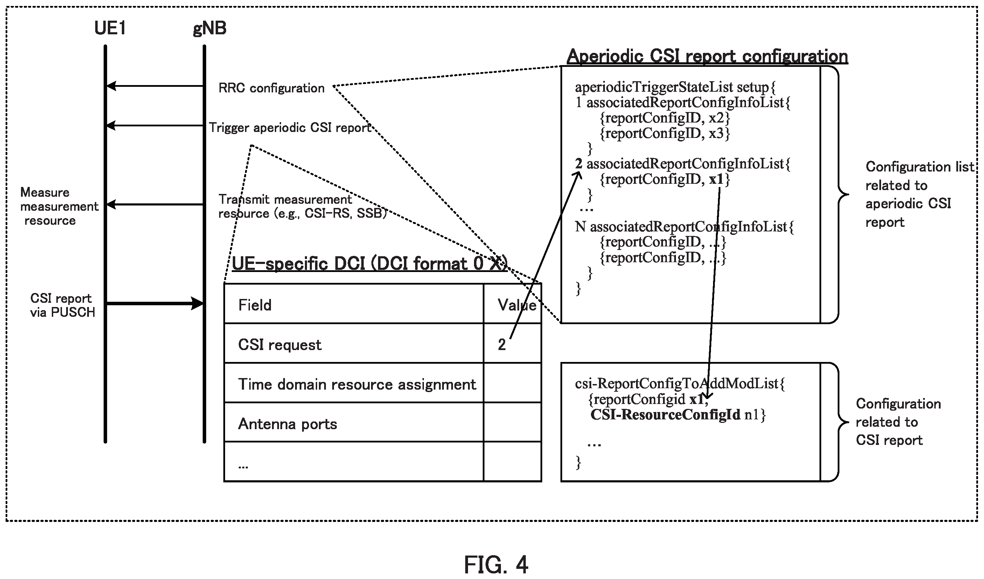

FIG. 4 illustrates an example of a trigger method of an aperiodic CSI measurement and report.

In FIG. 4, a base station (gNB) configures a configuration list of an aperiodic CSI trigger in a terminal (e.g., UE1) by using a radio resource control (RRC) message. The aperiodic CSI trigger configuration list (e.g., "aperiodicTriggerStateList") includes, for example, a plurality of report configuration lists (e.g., "associatedReportConfigInfoList"), and one or a plurality of report configurations (e.g., "reportConfigId") is configured in the report configuration list. The terminal specifies, for example, information on a resource to be measured and information on a report with reference to the reportConfigId.

In FIG. 4, the base station triggers, for example, an aperiodic CSI measurement and report (e.g., aperiodic CSI report) for a specific terminal by using a UE-specific DCI (e.g., DCI format 0_X). In this case, the UE-specific DCI may be configured with a field (e.g., CSI request field) that triggers the aperiodic CSI measurement and report. The configuration to be applied by the terminal is determined from the plurality of report configuration lists by the value of the CSI request field. For example, in the example of FIG. 4, in a case where the value "2" of the CSI request field is indicated to the terminal by the UE-specific DCI, the terminal applies the second "associatedReportConfigInfoList" in the "aperiodicTriggerStateList". That is, the terminal performs the aperiodic CSI measurement and report by using the measurement resource configuration (e.g., "CSI-ResourceConfigId") and the report configuration (e.g., reportConfigId) configured in the second "associatedReportConfigInfoList".

For example, the base station may transmit a measurement resource, such as a CSI reference signal (CSI-RS) or a synchronization signal block (SSB) to the terminal, and the terminal may perform the aperiodic CSI measurement based on the measurement resource.

Further, after the aperiodic CSI measurement, the terminal reports, for example, the measurement value (e.g., CSI report) to the base station by using a physical uplink shared channel (PUSCH). In this case, scheduling information (e.g., time domain resource assignment field or antenna port field) of PUSCH may be indicated to the terminal together with the CSI request field by the UE-specific DCI. The terminal specifies the assignment of PUSCH resource for reporting the CSI measurement value based on the scheduling information on the indicated PUSCH.

In the existing aperiodic CSI measurement and report, the UE-specific DCI is supported, and the trigger by a group common DCI is not supported.

### [Aperiodic Terminal-to-terminal CLI Measurement by UE-specific DCI or Group common DCI]

### <Option 1: Trigger by UE-specific DCI>

An example of a trigger method of the aperiodic terminal-to-terminal CLI measurement by a UE-specific DCI or a group common DCI will be described.

Examples of the trigger method of the aperiodic terminal-to-terminal CLI measurement by the UE-specific DCI include the following methods.

### <Option 1-1: Reusing CSI request field>

The method of Option 1-1 is a method of triggering the aperiodic terminal-to-terminal CLI measurement by using an existing aperiodic CSI measurement trigger field (e.g., the request field).

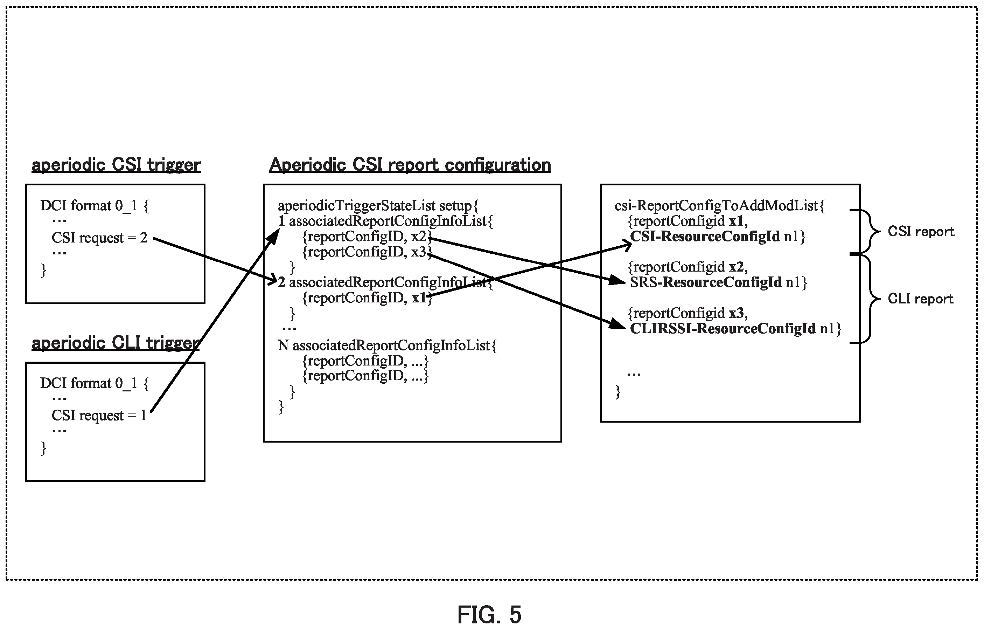

FIG. 5 illustrates an example of the UE-specific DCI and the configuration of the aperiodic terminal-to-terminal CLI or CSI measurement and report.

In FIG. 5, the configuration of the aperiodic terminal-to-terminal CLI measurement and report is configured together with the configuration of the aperiodic CSI measurement and report.

However, the measurement resource is different between the CSI measurement and the terminal-to-terminal CLI measurement. For example, information on the SRS resource (e.g., SRS-ResourceConfig) or information on the CLI-RSSI measurement resource (e.g., CLI-RSSI-ResourceConfig) may be configured in the measurement resource for the terminal-to-terminal CLI measurement (e.g., dedicated to the terminal-to-terminal CLI measurement).

In FIG. 5, the aperiodic terminal-to-terminal CLI measurement by the UE-specific DCI reuses the CSI request field for the aperiodic CSI measurement trigger. In the example of FIG. 5, in the aperiodic CSI trigger configuration list (e.g., "aperiodicTriggerStateList"), the base station configures the first "associatedReportConfigInfoList" for the CLI measurement report. In this case, the base station indicates, to the terminal, the UE-specific DCI in which the value of the CSI request field is configured to "1", for example, and the specific terminal applies the configuration of the aperiodic terminal-to-terminal CLI measurement and report configured in the associatedReportConfigInfoList corresponding to the indicated value of the CSI request field and performs the aperiodic terminal-to-terminal CLI measurement and report by using the configuration.

### <Option 1-2: Introducing new CLI trigger field>

The method of Option 1-2 is a method of introducing a trigger field for an aperiodic terminal-to-terminal CLI measurement (e.g., "CLI trigger field" or the like) and triggering the aperiodic terminal-to-terminal CLI measurement by using the newly introduced field.

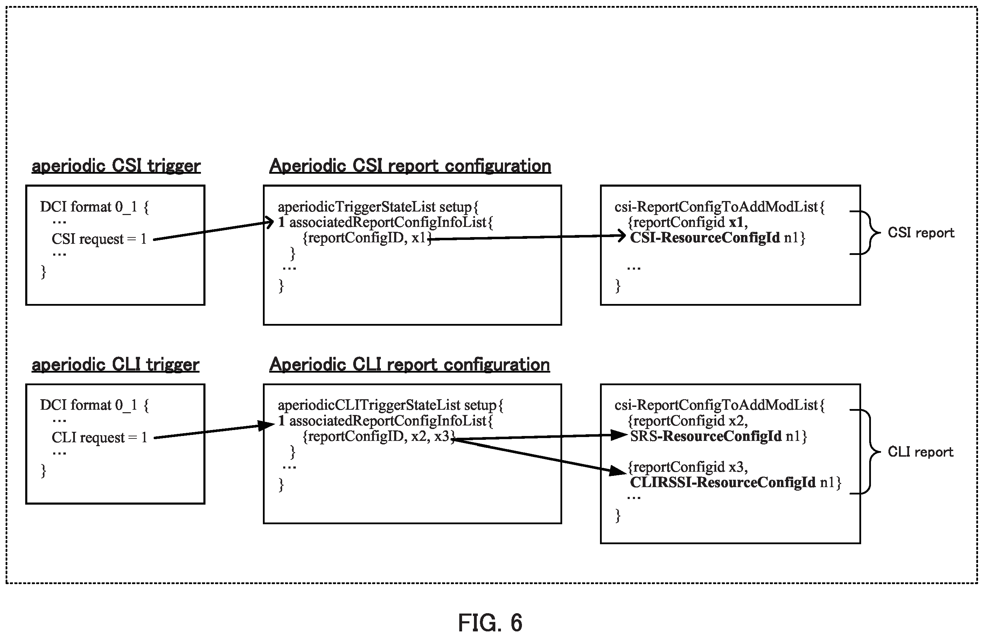

FIG. 6 illustrates an example of the UE-specific DCI, the configuration of the aperiodic terminal-to-terminal CLI measurement and report, and the configuration of the aperiodic CSI measurement and report.

The upper part of FIG. 6 illustrates an example of the existing aperiodic CSI measurement trigger method, and the lower part of FIG. 6 illustrates an example of the newly introduced aperiodic CLI measurement trigger method.

In Option 1-2, the aperiodic terminal-to-terminal CLI measurement and report configuration (e.g., "aperiodicCLITriggerStateList") for the CLI is newly configured. The base station indicates the configuration of the aperiodic terminal-to-terminal CLI measurement and report to be applied to the specific terminal by using, for example, the newly introduced CLI trigger field.

### <Option 1-3: Extending CSI request field>

The method of Option 1-3 is a method of extending the existing aperiodic CSI measurement trigger field (e.g., CSI request field) to trigger an aperiodic terminal-to-terminal CLI measurement.

For example, the size (existing size is a maximum of 6 bits) of the CSI request field may be extended (e.g., extended by 2 bits). In this case, the existing periodic CSI measurement and report configuration may be reused as the configuration of the aperiodic terminal-to-terminal CLI measurement and report.

### <Option 2: Trigger by group common DCI>

The trigger of an aperiodic terminal-to-terminal CLI measurement of a plurality of terminals by a group common DCI can be effectively used, for example, in a situation in which the aperiodic terminal-to-terminal CLI measurement and report frequently occur. For example, in a situation in which the aperiodic terminal-to-terminal CLI measurement and report frequently occur, in a case of the trigger method using the UE-specific DCI, the base station individually indicates, to the plurality of terminals, a plurality of UE-specific DCIs, so that the signaling overhead is likely to increase. Meanwhile, the trigger method of the aperiodic terminal-to-terminal CLI measurement of the plurality of terminals by the group common DCI can provide (trigger) the indication to the plurality of terminals at once, so that the signaling overhead can be reduced.

Further, the trigger method of the aperiodic terminal-to-terminal CLI measurement by a group common DCI may be the following method.

### <Option 2-1: Block number-based trigger field>

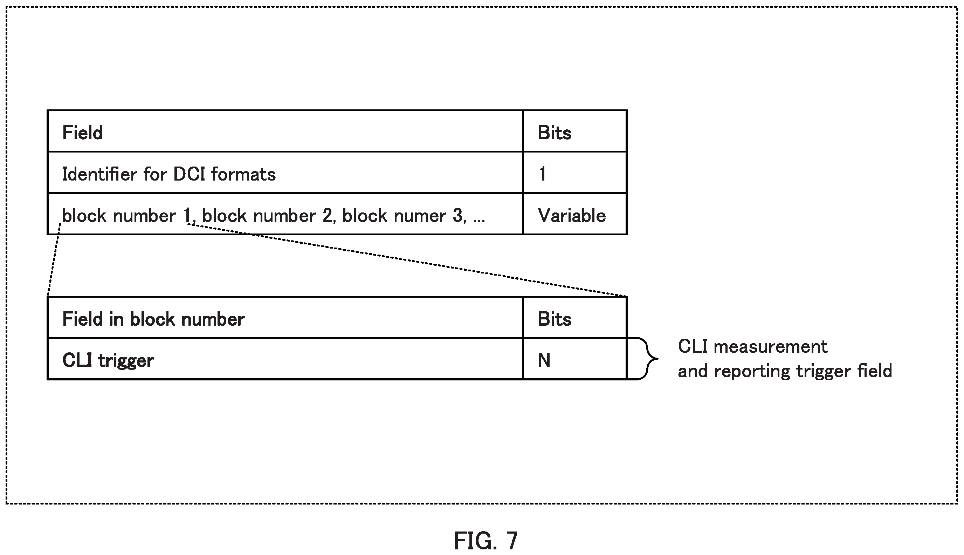

The aperiodic terminal-to-terminal CLI measurement of a plurality of terminals by a group common DCI is triggered by, for example, indicating, to the plurality of terminals, by using a "block number". FIG. 7 illustrates an example of the trigger to the plurality of terminals using a group common DCI.

The table illustrated in FIG. 7 presents the fields of the entire group common DCI, and a plurality of block numbers can be configured. For example, as illustrated in FIG. 7, a trigger field for an aperiodic terminal-to-terminal CLI measurement (e.g., "CLI trigger" or "CSI request") can be configured in one block number.

The terminal may be configured to read which block number from among the plurality of block numbers included in the group common DCI by, for example, the RRC message. For example, terminal #1 can be configured to read block number 1, and terminal #2 can be configured to read block number 2. Further, it is also possible to configure a plurality of terminals to read the same block number. The terminal applies the configuration of the aperiodic terminal-to-terminal CLI measurement and report by using the trigger field for the aperiodic terminal-to-terminal CLI measurement in the read block number.

### (Embodiment 1)

### [Outline of Communication System]

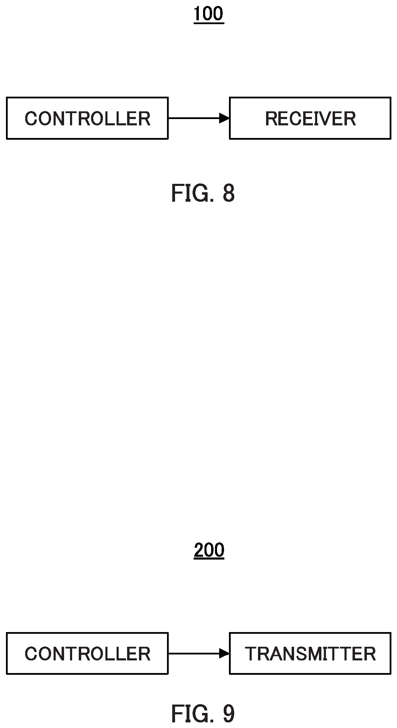

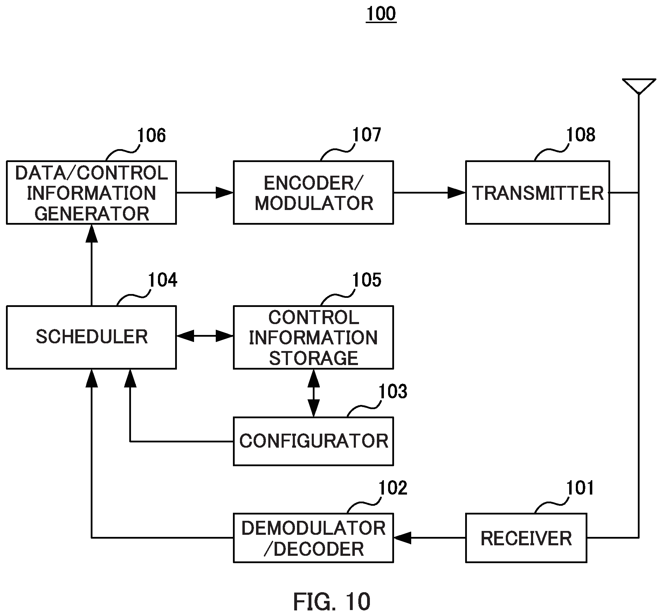

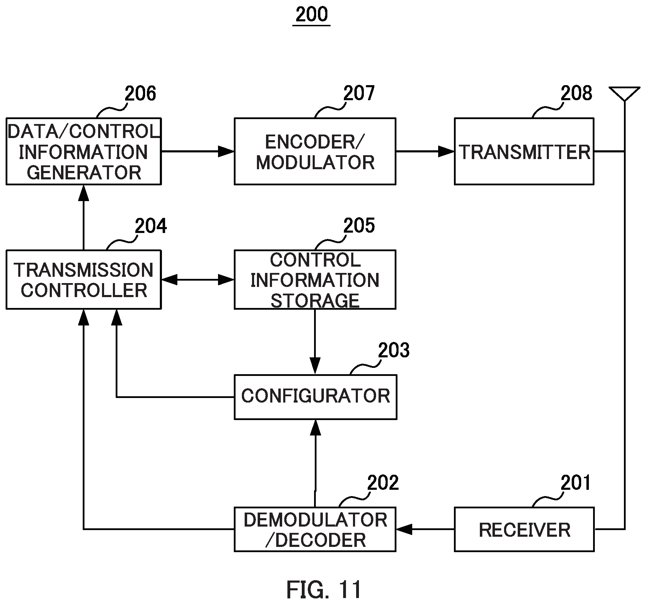

A communication system according to one aspect of the present disclosure may include, for example, base station 100 (e.g., gNB) illustrated in FIGS. 8 and 10 and terminal 200 (e.g., UE) illustrated in FIGS. 9 and 11. A plurality of base stations 100 and terminals 200 may be present in the communication system.

FIG. 8 is a block diagram illustrating a configuration example of a part of base station 100 according to one aspect of the present disclosure. In base station 100 illustrated in FIG. 8, a controller (e.g., corresponding to control circuitry) determines a resource used for an aperiodic report of the terminal-to-terminal CLI based on a method different from a method of triggering an aperiodic measurement of terminal-to-terminal CLI. A receiver (e.g., corresponding to reception circuitry) receives the report by using the resource.

FIG. 9 is a block diagram illustrating a configuration example of a part of terminal 200 according to one aspect of the present disclosure. In terminal 200 illustrated in FIG. 9, a controller (e.g., corresponding to control circuitry) determines a resource used for the aperiodic report of the terminal-to-terminal CLI based on a method different from a method of triggering the aperiodic measurement of the terminal-to-terminal CLI. A transmitter (e.g., corresponding to transmission circuitry) transmits the report by using the resource.

### [Configuration of Base Station]

FIG. 10 is a block diagram illustrating a configuration example of base station 100 according to one aspect of the present disclosure. In FIG. 10, base station 100 includes receiver 101, demodulator/decoder 102, configurator 103, scheduler 104, control information storage 105, data/control information generator 106, encoder/modulator 107, and transmitter 108.

For example, at least one of demodulator/decoder 102, configurator 103, scheduler 104, control information storage 105, data/control information generator 106, or encoder/modulator 107 may be included in the controller illustrated in FIG. 8, and receiver 101 may be included in the receiver illustrated in FIG. 8.

Receiver 101 performs, for example, reception processing such as downconversion or A/D conversion on a received signal received through an antenna and outputs the reception signal after the reception processing to demodulator/decoder 102.

For example, demodulator/decoder 102 demodulates and decodes the received signal input from receiver 101 and outputs the decoding result to scheduler 104.

Configurator 103 determines, for example, a configuration related to an aperiodic terminal-to-terminal CLI report. For example, configurator 103 may determine the configuration related to the aperiodic terminal-to-terminal CLI report based on control information related to the configuration of the terminal-to-terminal CLI measurement resource input from control information storage 105. Configurator 103 outputs information related to the configuration of the aperiodic terminal-to-terminal CLI report to scheduler 104.

Scheduler 104 may perform, for example, scheduling for terminal 200. Scheduler 104 performs, for example, scheduling of transmission and reception of each terminal 200 based on at least one of a decoding result input from demodulator/decoder 102, information related to the configuration of the aperiodic terminal-to-terminal CLI report input from configurator 103, and control information input from control information storage 105, and issues an instruction to generate at least one of data and control information to data/control information generator 106. Further, scheduler 104 outputs the scheduling information to control information storage 105.

Control information storage 105 stores, for example, control information related to the configuration (e.g., configuration of measurement resource transmitted from aggressor UE) related to the terminal-to-terminal CLI measurement. Control information storage 105 may output the stored information to each component unit (e.g., configurator 103 and scheduler 104) of base station 100 as necessary.

Data/control information generator 106 generates at least one of data and control information in accordance with the instruction from scheduler 104 and outputs a signal including the generated data or control information to encoder/modulator 107, for example. Note that the generated data and control information may include at least one of higher layer signaling information and downlink control information.

Encoder/modulator 107 encodes and modulates, for example, the signal input from data/control information generator 106 and outputs the modulated signal to transmitter 108.

Transmitter 108 performs transmission processing, such as D/A conversion, up-conversion, or amplification on the signal input from encoder/modulator 107, for example, and transmits a radio signal obtained by the transmission processing to terminal 200 through an antenna.

### [Configuration of Terminal]

FIG. 11 is a block diagram illustrating a configuration example of terminal 200 according to one aspect of the present disclosure. In FIG. 11, terminal 200 includes receiver 201, demodulator/decoder 202, configurator 203, transmission controller 204, control information storage 205, data/control information generator 206, encoder/modulator 207, and transmitter 208.

For example, at least one of demodulator/decoder 202, configurator 203, transmission controller 204, control information storage 205, data/control information generator 206, and encoder/modulator 207 may be included in the controller illustrated in FIG. 9, and transmitter 208 may be included in the transmitter illustrated in FIG. 9.

For example, receiver 201 performs reception processing, such as down-conversion or A/D conversion on the received signal received via an antenna and outputs the received signal after the reception processing to demodulator/decoder 202.

Demodulator/decoder 202 demodulates and decodes, for example, a received signal input from receiver 201, and outputs the decoding result to transmission controller 204. Further, in a case where the decoding result includes information related to the resource used for the aperiodic terminal-to-terminal CLI report, demodulator/decoder 202 outputs the information to configurator 203.

Configurator 203 configures resource assignment for the aperiodic terminal-to-terminal CLI report based on control information (e.g., information related to a report configuration of the aperiodic terminal-to-terminal CLI report) input from control information storage 205 and information related to the resource used for the aperiodic terminal-to-terminal CLI report input from demodulator/decoder 202. Configurator 203 outputs information related to the configured resource to transmission controller 204.

Transmission controller 204 outputs the signaling information (e.g., information related to the resource configuration of the aperiodic terminal-to-terminal CLI and information related to the report configuration) included in the decoding result input from demodulator/decoder 202 to control information storage 205. Further, transmission controller 204 may issue an instruction to generate at least one of data and control information to data/control information generator 206 based on, for example, control information input from control information storage 205 or a decoding result (e.g., downlink control information) input from demodulator/decoder 202. Further, transmission controller 204 may output the measurement value of the terminal-to-terminal CLI to data/control information generator 206 based on the configuration information input from configurator 203.

Control information storage 205 stores, for example, control information (e.g., information related to the resource configuration of the aperiodic terminal-to-terminal CLI and information related to the report configuration) input from transmission controller 204, and outputs the stored information to each configuration unit (e.g., configurator 203 and transmission controller 204) as necessary.

Data/control information generator 206 generates data or control information, for example, in accordance with the instruction from transmission controller 204. Data/control information generator 206 outputs a signal including the generated data or control information to encoder/modulator 207.

Encoder/modulator 207 encodes and modulates the signal input from data/control information generator 206 and outputs the modulated transmission signal to transmitter 208, for example.

Transmitter 208 performs transmission processing, such as D/A conversion, up-conversion, and/or amplification on the signal input from encoder/modulator 207 and transmits a radio signal obtained by the transmission processing to base station 100 from an antenna, for example.

### [Operations of Base Station 100 and Terminal 200]

Exemplary operations of base station 100 and terminal 200 having the above configurations will be described.

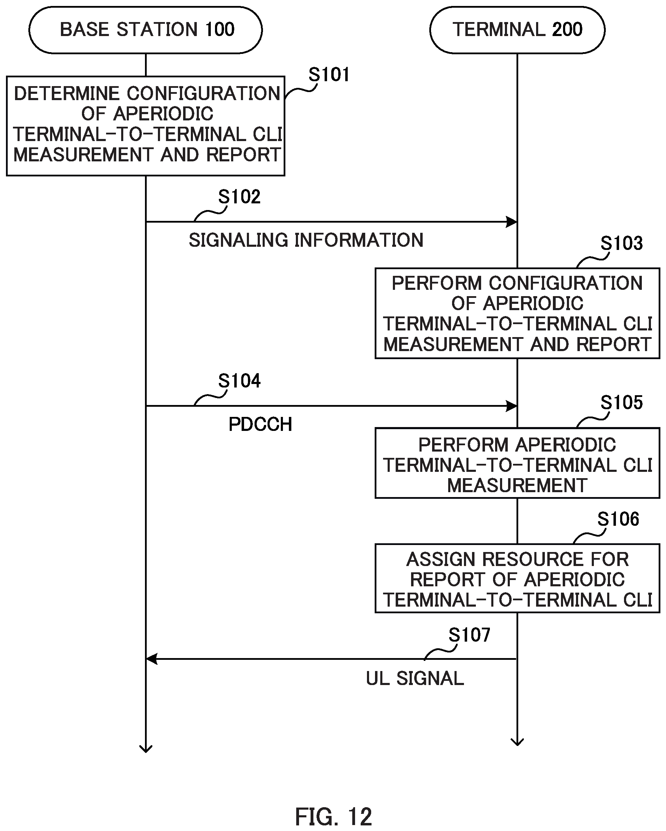

FIG. 12 is a sequence diagram illustrating an operation example of base station 100 and terminal 200.

In FIG. 12, base station 100 determines a configuration related to an aperiodic terminal-to-terminal CLI measurement and report (S101).

Base station 100 transmits higher layer signaling information including the configuration thus determined to terminal 200 (S102).

Terminal 200 performs the configuration of the aperiodic terminal-to-terminal CLI measurement and report based on the configuration from base station 100 (S103).

Base station 100 transmits, for example, control information related to the aperiodic terminal-to-terminal CLI and the resource used for the report of the aperiodic terminal-to-terminal CLI to terminal 200 (S104). The control information may be transmitted, for example, by using a downlink control channel (e.g., physical downlink control channel (PDCCH)) including a UE-specific DCI or a group common DCI.

Terminal 200 receives PDCCH and measures the aperiodic terminal-to-terminal CLI based on the control information included in the PDCCH (S105). Further, terminal 200 assigns a resource (e.g., PUSCH resource or PUCCH resource) for the aperiodic terminal-to-terminal CLI report based on the control information included in PDCCH (S106).

Terminal 200 transmits a UL signal (e.g., PUSCH or PUCCH) to base station 100 (S107). The UL signal may include, for example, the aperiodic terminal-to-terminal CLI report.

### [Aperiodic Terminal-to-terminal CLI Report Using PUSCH Resource]

Next, an example of a method of the aperiodic terminal-to-terminal CLI report (report) according to one non-limiting exemplary embodiment of the present disclosure will be described.

For example, an indication method of the aperiodic terminal-to-terminal CLI report by base station 100 (e.g., configurator 103 and scheduler 104) and an operation example of terminal 200 (e.g., configurator 203 and transmission controller 204) will be described.

In the present embodiment, a report method of the aperiodic terminal-to-terminal CLI using the PUSCH resource will be described. For example, in the present embodiment, in the aperiodic terminal-to-terminal CLI report, methods (report methods) related to the UE-specific DCI (report method 1) and the group common DCI (report method 2) will be described as examples of the method (or indication method) of the PUSCH resource assignment.

### <Report Method 1>

In Report Method 1, the assignment information of a PUSCH resource used for an aperiodic terminal-to-terminal CLI report using the PUSCH resource is indicated to the specific terminal 200 by the UE-specific DCI.

Base station 100 indicates, to specific terminal 200, the value of the PUSCH scheduling field related to the assignment of the PUSCH resource used for the aperiodic terminal-to-terminal CLI report by the UE-specific DCI.

Here, the PUSCH scheduling field may be indicated, for example, together with the trigger field for the aperiodic terminal-to-terminal CLI measurement (e.g., CSI request field or a CLI trigger field). Terminal 200 to which the PUSCH scheduling field is indicated transmits the measurement result (terminal-to-terminal CLI report) of the terminal-to-terminal CLI to base station 100 by using the PUSCH resource assigned by the PUSCH scheduling field.

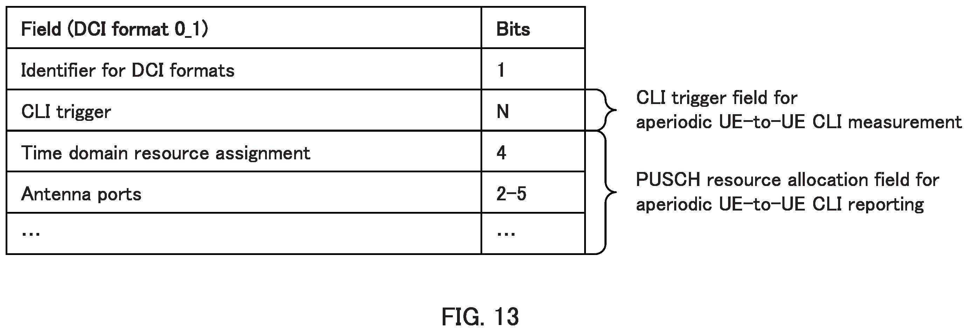

FIG. 13 illustrates a configuration example of the UE-specific DCI according to Report Method 1.

In the example of FIG. 13, the UE-specific DCI (e.g., DCI format 0_1) includes a trigger field for the aperiodic terminal-to-terminal CLI measurement (e.g., CLI trigger field) and a PUSCH resource assignment field for the aperiodic terminal-to-terminal CLI report (e.g., PUSCH scheduling field).

For example, the trigger field for the aperiodic terminal-to-terminal CLI measurement (e.g., information that triggers the measurement of the terminal-to-terminal CLI) may be a newly introduced CLI trigger field or the existing CSI request field.

Further, for example, the PUSCH resource assignment field for the aperiodic terminal-to-terminal CLI report (e.g., parameter related to the scheduling of the resource for the terminal-to-terminal CLI report) may reuse the PUSCH resource assignment field used for the existing aperiodic CSI report.

According to Report Method 1, since the mechanism of the PUSCH resource assignment of the existing aperiodic CSI report can be reused, a new field for the aperiodic terminal-to-terminal CLI report may not be added.

The PUSCH resource assignment field for the aperiodic terminal-to-terminal CLI report is not limited to the PUSCH resource assignment field used for the existing aperiodic CSI report and may be a newly introduced PUSCH resource assignment field.

### <Report Method 2>

In Report Method 2, the assignment information of the PUSCH resource used for the aperiodic terminal-to-terminal CLI report is simultaneously indicated to the plurality of terminals 200 by a group common DCI.

Hereinafter, as a method of indicating the PUSCH scheduling field for the aperiodic terminal-to-terminal CLI report, a method of indicating the PUSCH scheduling field by the group common DCI (Report Method 2-1), a method of configuring the PUSCH scheduling field by RRC (Report Method 2-2), a method of configuring the PUSCH scheduling field by RRC and the group common DCI (Report Method 2-3), and a method of not indicating the PUSCH scheduling field by the group common DCI (Report Method 2-4) will be described.

### <Report Method 2-1>

In Report Method 2-1, the method of assigning the PUSCH resource used for the aperiodic terminal-to-terminal CLI report is indicated for each block number of the group common DCI. For example, a plurality (e.g., all) of PUSCH scheduling fields used for the assignment of the PUSCH resource may be configured for each block number of the group common DCI.

Base station 100 configures (or sets) the trigger field for the aperiodic terminal-to-terminal CLI measurement and a plurality of PUSCH scheduling fields for the aperiodic terminal-to-terminal CLI report for each block number of the group common DCI and provides an indication to the plurality of terminals 200.

For example, terminal 200 may be configured with a parameter related to which block number to read from among a plurality of block numbers in the group common DCI by RRC.

Terminal 200 that has received the group common DCI applies the trigger field for the aperiodic terminal-to-terminal CLI measurement in the block number designated by RRC and the plurality of PUSCH scheduling fields for the aperiodic terminal-to-terminal CLI report. Terminal 200 measures the terminal-to-terminal CLI and then reports the terminal-to-terminal CLI to base station 100 by using the PUSCH resource for the report based on the applied PUSCH scheduling field.

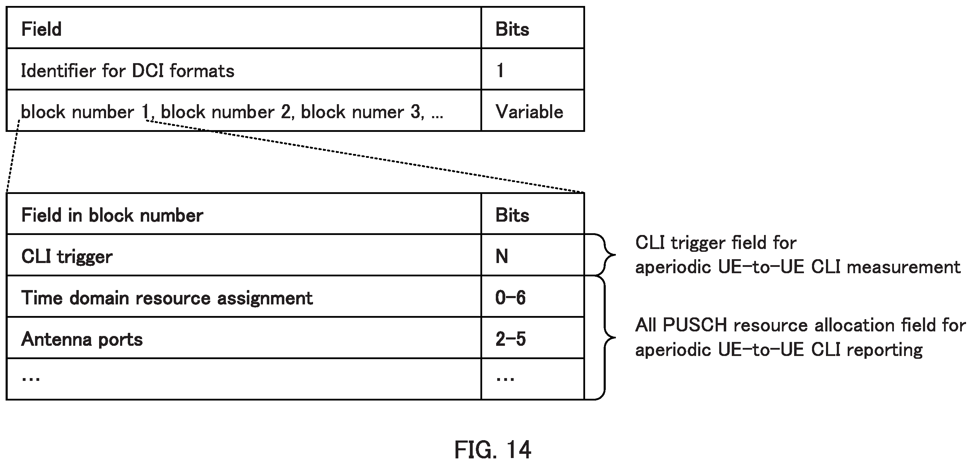

FIG. 14 illustrates a configuration example of the group common DCI according to Report Method 2-1.

As illustrated in FIG. 14, for each of the plurality of block numbers included in the group common DCI, a CLI trigger field for the aperiodic terminal-to-terminal CLI measurement and a plurality (e.g., all) of PUSCH scheduling fields (e.g., a time domain resource assignment field, an antenna port field, and the like) for the aperiodic terminal-to-terminal CLI report are configured.

In Report Method 2-1, the group common DCI includes information (e.g., a trigger field for the terminal-to-terminal CLI measurement) that triggers the measurement of the terminal-to-terminal CLI and a parameter (e.g., a plurality of PUSCH scheduling fields) related to the scheduling of the PUSCH resource. According to Report Method 2-1, base station 100 can flexibly schedule the PUSCH resource assignment for the aperiodic terminal-to-terminal CLI report by indicating a plurality (e.g., all) of PUSCH scheduling fields for the aperiodic terminal-to-terminal CLI report in the group common DCI.

### <Report Method 2-2>

In Report Method 2-2, the method of assigning the PUSCH resource used for the aperiodic terminal-to-terminal CLI report is a method of configuring a plurality (e.g., all) of PUSCH scheduling fields (e.g., a plurality of candidates of a parameter related to the scheduling of the PUSCH resource) used for the PUSCH resource assignment to terminal 200 by RRC.

For example, base station 100 configures one or a plurality of pieces of PUSCH scheduling information to terminal 200 by RRC. The PUSCH scheduling information may be configured by, for example, identification information (e.g., referred to as "PUSCH scheduling information ID") that identifies a plurality of pieces of PUSCH scheduling information and a plurality (e.g., all) of PUSCH scheduling fields used for the PUSCH resource assignment.

Base station 100 configures (or sets) the trigger field for the aperiodic terminal-to-terminal CLI measurement and the PUSCH scheduling information ID for the aperiodic terminal-to-terminal CLI report for each block number of the group common DCI and provides an indication to a plurality of terminals 200.

For example, terminal 200 may be configured with a parameter related to which block number to read from among a plurality of block numbers in the group common DCI by RRC.

The terminal that has received the group common DCI applies a plurality of PUSCH scheduling fields configured in the PUSCH scheduling information (e.g., information configured by RRC) corresponding to the trigger field for the aperiodic terminal-to-terminal CLI measurement in the block number designated by the group common DCI and the PUSCH scheduling information ID for the aperiodic terminal-to-terminal CLI report in the block number designated by the group common DCI. Terminal 200 measures the terminal-to-terminal CLI and then reports the terminal-to-terminal CLI to base station 100 by using the PUSCH resource for the report based on the applied PUSCH scheduling field.

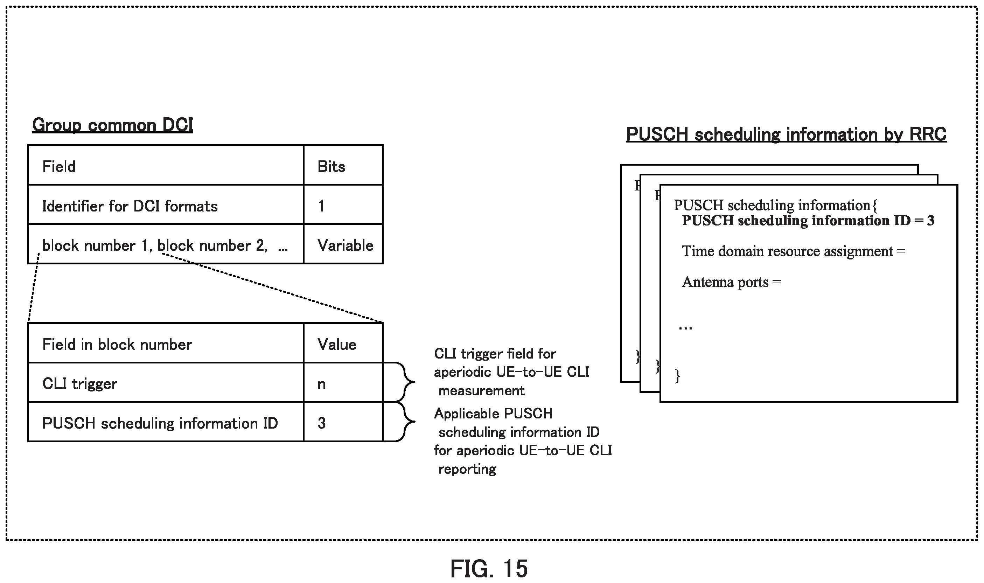

FIG. 15 illustrates a configuration example of PUSCH scheduling information configured by RRC and the group common DCI according to Report Method 2-2.

In the example illustrated in FIG. 15, base station 100 configures three pieces of PUSCH scheduling information (e.g., PUSCH scheduling information ID = 1 to 3) to terminal 200 by RRC.

Further, as illustrated in FIG. 15, the CLI trigger field for the aperiodic terminal-to-terminal CLI measurement and the PUSCH scheduling information ID field for the aperiodic terminal-to-terminal CLI report are configured in each block number in the group common DCI indicated from base station 100 to terminal 200. For example, in block number 1 illustrated in FIG. 15, the value of the CLI trigger field is configured to "n", and the value of the PUSCH scheduling information ID field is configured to "3 ". In this case, terminal 200 that has received block number 1 applies a plurality (e.g., all) of PUSCH scheduling fields in the PUSCH scheduling information (in the example of FIG. 15, PUSCH scheduling information of PUSCH scheduling information ID = 3) having the same ID as the value ("3") of the PUSCH scheduling information ID field.

In Report Method 2-2, a plurality of candidates (e.g., a plurality of pieces of PUSCH scheduling information) for the parameter related to the scheduling of the PUSCH resource are configured to terminal 200 by RRC. Further, the group common DCI includes information (e.g., a trigger field for the terminal-to-terminal CLI measurement) that triggers the terminal-to-terminal CLI measurement and identification information (e.g., a PUSCH scheduling information ID field) that identifies any one of a plurality of candidates (e.g., a plurality of pieces of PUSCH scheduling information). According to Report Method 2-2, base station 100 can reduce the number of bits of the group common DCI by indicating the ID for identifying the PUSCH scheduling information to be applied in the group common DCI, since the PUSCH scheduling information is configured by RRC.

### <Report Method 2-3>

In Report Method 2-3, the method of assigning the PUSCH resource used for the aperiodic terminal-to-terminal CLI report is a method of configuring and changing (or updating) the PUSCH scheduling field to terminal 200 by RRC and configuring and indicating the PUSCH scheduling field for each block number of the group common DCI.

Base station 100 configures one or a plurality of pieces of PUSCH scheduling information (e.g., a plurality of candidates for a parameter related to the PUSCH scheduling) to terminal 200 by RRC. The PUSCH scheduling information may be configured by, for example, identification information (e.g., PUSCH scheduling information ID) that identifies a plurality of pieces of PUSCH scheduling information and a plurality (e.g., all) of PUSCH scheduling fields used for the PUSCH resource assignment.

Base station 100 configures (or sets) the trigger field for the aperiodic terminal-to-terminal CLI measurement, the PUSCH scheduling information ID, and the PUSCH scheduling field for the aperiodic terminal-to-terminal CLI report for each block number of the group common DCI and provides an indication to a plurality of terminals 200. At least one field (e.g., a changed field) of the PUSCH scheduling fields configured by RRC may be used as the PUSCH scheduling field for each block number, or different fields may be used.

For example, terminal 200 may be configured with a parameter related to which block number to read from among a plurality of block numbers in the group common DCI by RRC.

The terminal that has received the group common DCI applies the PUSCH scheduling field configured in the PUSCH scheduling information (e.g., information configured by RRC) corresponding to the trigger field for the aperiodic terminal-to-terminal CLI measurement in the block number designated by the group common DCI and the PUSCH scheduling information ID for the aperiodic terminal-to-terminal CLI report in the block number designated by the group common DCI.

Further, terminal 200 applies the PUSCH scheduling field in the block number designated by the group common DCI.

In this case, in a case where the PUSCH scheduling field applied by RRC and the PUSCH scheduling field in the block number applied by the group common DCI are the same, terminal 200 may apply the PUSCH scheduling field in the block number.

Terminal 200 measures the terminal-to-terminal CLI and then reports the terminal-to-terminal CLI to base station 100 by using the PUSCH resource for the report based on the applied PUSCH scheduling field.

In Report Method 2-3, a plurality of candidates (e.g., a plurality of pieces of PUSCH scheduling information) for the parameter related to the scheduling of the PUSCH resource are configured to terminal 200 by RRC. Further, the group common DCI includes information that triggers the terminal-to-terminal CLI measurement, identification information (e.g., PUSCH scheduling information ID) that identifies any one of a plurality of candidates for the parameter related to the scheduling of the PUSCH resource, and at least one parameter of a plurality of candidates for the parameter related to the scheduling of the PUSCH resource. According to Report Method 2-3, base station 100 can indicate the PUSCH scheduling information to be changed from the PUSCH scheduling information configured by RRC by the group common DCI, so that the flexibility of the PUSCH resource assignment can be improved while reducing the number of bits of the group common DCI.

### <Report Method 2-4>

In Report Method 2-4, the method of assigning the PUSCH resource used for the aperiodic terminal-to-terminal CLI report is a method of reporting the terminal-to-terminal CLI to base station 100 at a predetermined timing of the PUSCH transmission opportunity (e.g., a resource at a predetermined timing among PUSCH transmission opportunities) after the measurement of the terminal-to-terminal CLI, without being indicated by the group common DCI. For example, in Report Method 2-4, the trigger field for the aperiodic terminal-to-terminal CLI measurement may be indicated by the group common DCI, and the PUSCH scheduling information may not be indicated.

For example, terminal 200 may report the terminal-to-terminal CLI to base station 100 at the first PUSCH transmission opportunity after the measurement of the terminal-to-terminal CLI. The predetermined timing of the PUSCH transmission opportunity is not limited to the first transmission opportunity after the measurement of the terminal-to-terminal CLI, and may be, for example, the N-th PUSCH transmission opportunity after the measurement of the terminal-to-terminal CLI. The N-th may be defined (or specified) by the specification, for example, or may be configured (or indicated) to terminal 200 by RRC. Further, the value of N may be individually configured in terminal 200.

Further, base station 100 may indicate, to terminal 200, a PUSCH scheduling field (e.g., a PUSCH transmission opportunity) for assigning the PUSCH resource for the terminal-to-terminal CLI report by using the UE-specific DCI. In this case, terminal 200 holds the measurement result of the terminal-to-terminal CLI until the UE-specific DCI is received.

Further, since terminal 200 possibly fails to receive the group common DCI, terminal 200 may report a flag indicating whether reception of the group common DCI has failed (or has succeeded or failed) to base station 100 together with the measurement result of the terminal-to-terminal CLI. For example, in a case where the flag is "1", it may indicate that the group common DCI has been successfully received, and in a case where the flag is "0", it may indicate that the group common DCI has not been received (or has failed). The meanings of "0" and "1" of the flag may be reversed. By the indication of the flag (e.g., information on whether terminal 200 has succeeded or failed in receiving the group common DCI), base station 100 can specify the type (e.g., whether it is the terminal-to-terminal CLI) of the information to be reported by the scheduled PUSCH resource.

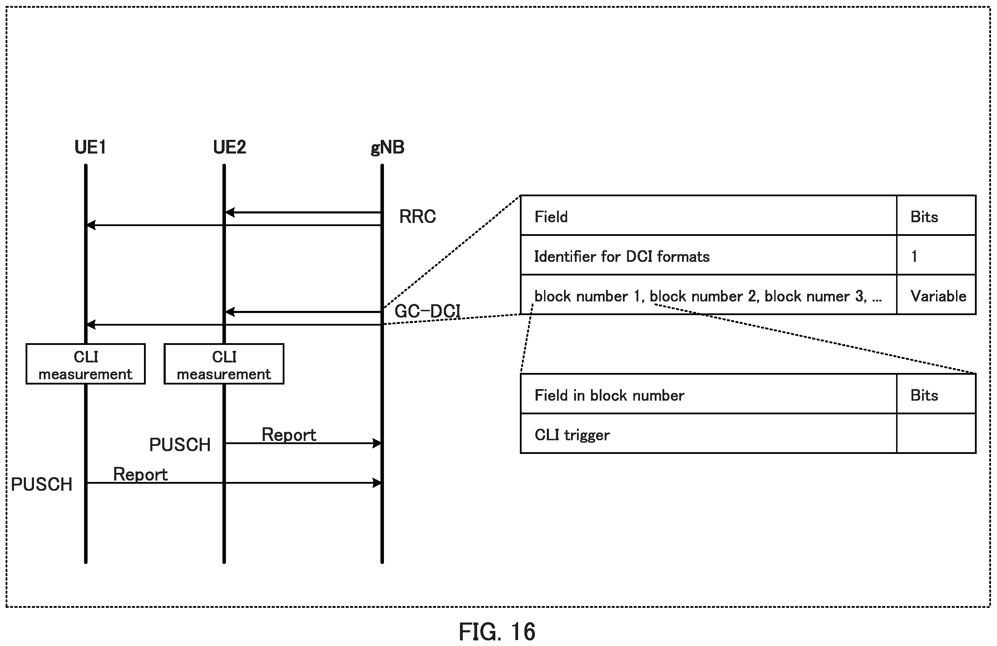

FIG. 16 illustrates an operation example of Report Method 2-4.

In FIG. 16, base station 100 (e.g., gNB) triggers the aperiodic terminal-to-terminal CLI measurement for a plurality of terminals 200 (e.g., UE1 and UE2) by using the group common DCI. As illustrated in FIG. 16, the trigger field for the aperiodic terminal-to-terminal CLI measurement (e.g., a CLI trigger field or the like) is configured in each block number in the group common DCI, and the PUSCH scheduling field is not configured.

In FIG. 16, terminal 200 is configured with a parameter related to which block number to read from among a plurality of block numbers in the group common DCI by RRC in advance. The UE1 and the UE2 measure the aperiodic terminal-to-terminal CLI based on the trigger field for the aperiodic terminal-to-terminal CLI measurement included in the block number configured in the group common DCI for the UE.

The UE1 and the UE2 transmit the measured terminal-to-terminal CLI value to the gNB in the next PUSCH transmission opportunity after the measurement period of the terminal-to-terminal CLI ends.

In Report Method 2-4, information on the PUSCH resource is indicated to terminal 200 by the UE-specific DCI, and information that triggers the terminal-to-terminal CLI measurement is indicated to terminal 200 by the group common DCI. Then, terminal 200 transmits the terminal-to-terminal CLI report by using the resource at a predetermined timing among the PUSCH resources indicated by the UE-specific DCI after the terminal-to-terminal CLI measurement. According to Report Method 2-4, base station 100 does not need to indicate the PUSCH scheduling information by the group common DCI, so that the number of bits of the group common DCI can be reduced.

The examples of Report Methods of the aperiodic terminal-to-terminal CLI have been described above.

As described above, in the present embodiment, terminal 200 determines the resource used for the aperiodic terminal-to-terminal CLI report based on a method different from a method of triggering the aperiodic terminal-to-terminal CLI measurement and transmits the aperiodic terminal-to-terminal CLI report by using the determined resource. For example, the resource used for the aperiodic terminal-to-terminal CLI report may be indicated by a field different from the trigger field for measurement in the UE-specific DCI or the group common DCI, may be indicated by a signal (e.g., RRC) different from the DCI that indicates the trigger field for measurement or may be indicated by a DCI (e.g., the UE-specific DCI) different from the group common DCI that indicates the trigger field for measurement. As a result, base station 100 can appropriately indicate the PUSCH resource used for the aperiodic terminal-to-terminal CLI report. Therefore, according to the present embodiment, terminal 200 can appropriately report the interference between the terminals.

### (Embodiment 2)

In Embodiment 1, the aperiodic terminal-to-terminal CLI report using the PUSCH resource has been described. In the present embodiment, the aperiodic terminal-to-terminal CLI report using a PUCCH resource will be described.

In the present embodiment, the configurations of base station 100 and terminal 200 may be the same configurations as those in Embodiment 1

As a report method of the aperiodic terminal-to-terminal CLI using the PUCCH resource, for example, a method (Report Method 1) of reporting the aperiodic terminal-to-terminal CLI by using a PUCCH resource for at least one of periodic or semi-persistent (hereinafter, also referred to as periodic/semi-persistent) CSI report and terminal-to-terminal CLI report (hereinafter, also referred to as CSI/CLI report) and a method (Report Method 2) of reporting the aperiodic terminal-to-terminal CLI by using a PUCCH resource that is not for periodic/semi-persistent CSI/CLI report will be described.

The aperiodic terminal-to-terminal CLI report using the PUCCH resource according to these methods can be applied to both the UE-specific DCI and the group common DCI. Hereinafter, Report Method 1 and Report Method 2 using a PUCCH resource will be described.

### [Report Method 1]

The aperiodic terminal-to-terminal CLI report method using the PUCCH resource according to Report Method 1 is a method of reporting the aperiodic terminal-to-terminal CLI by using a PUCCH resource for periodic/semi-persistent CSI/CLI report.

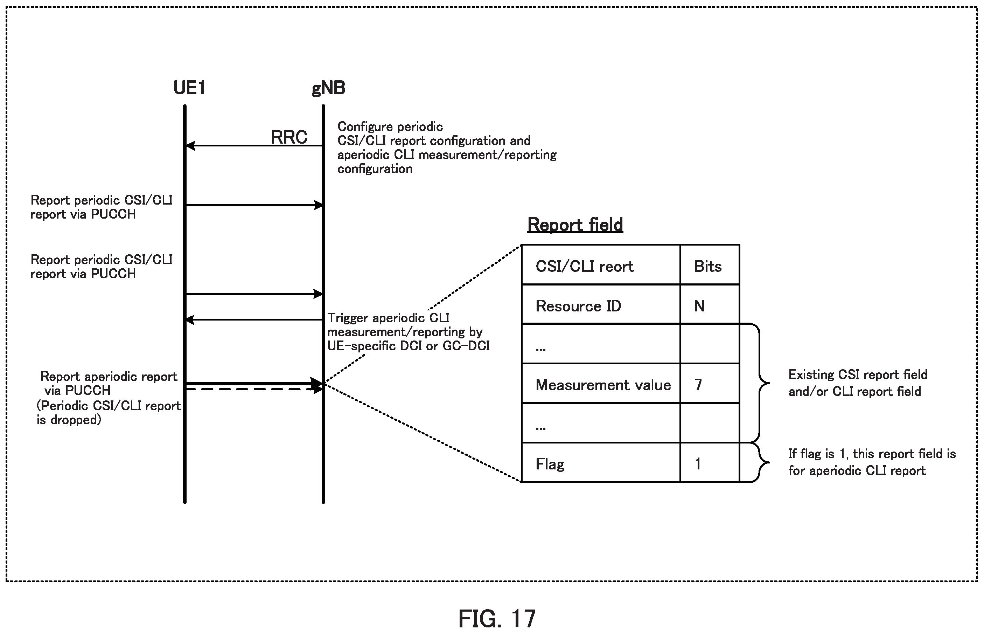

FIG. 17 illustrates an operation example according to Report Method 1.

In FIG. 17, base station 100 may configure a configuration related to the periodic/semi-persistent CSI/CLI report to terminal 200 by RRC. Terminal 200 may report the periodic/semi-persistent CSI/CLI to base station 100 based on the configuration.

Further, base station 100 may configure the configuration related to the aperiodic terminal-to-terminal CLI measurement and report to terminal 200 by RRC.

Terminal 200 (e.g., UE1) reports the aperiodic terminal-to-terminal CLI to base station 100 (e.g., gNB) by using a predetermined PUCCH resource among a PUCCH resources for periodic/semi-persistent CSI/CLI after the measurement period of the aperiodic terminal-to-terminal CLI ends. The predetermined PUCCH resource may be, for example, the first PUCCH resource after the measurement period of the aperiodic terminal-to-terminal CLI ends or the N-th PUCCH resource. The value of N may be defined by the specification, for example, may be configured by RRC, or may be instructed by DCI.

In a case where the aperiodic terminal-to-terminal CLI is reported by using the PUCCH resource for periodic/semi-persistent CSI/CLI report, the periodic/semi-persistent CSI/CLI report is dropped.

As described above, in a case where terminal 200 receives PDCCH (e.g., UE-specific DCI or group common DCI) that triggers the aperiodic terminal-to-terminal CLI measurement and report, terminal 200 reports the aperiodic terminal-to-terminal CLI report to base station 100. Meanwhile, for example, in a case where terminal 200 does not receive PDCCH (e.g., UE-specific DCI or group common DCI) that triggers the aperiodic terminal-to-terminal CLI measurement and report, terminal 200 reports the periodic/semi-persistent CSI/CLI report to base station 100 instead of the aperiodic terminal-to-terminal CLI report. That is, the type of signal transmitted by using the PUCCH resource for periodic/semi-persistent CSI/CLI varies depending on the success or failure of receiving the trigger of the aperiodic terminal-to-terminal CLI measurement and report in terminal 200.

Therefore, terminal 200 may report, for example, a flag indicating whether PDCCH that triggers the aperiodic terminal-to-terminal CLI measurement and report has been successfully received to base station 100 together with the report from terminal 200 in order for base station 100 to identify which of the periodic/semi-persistent CSI/CLI or the aperiodic terminal-to-terminal CLI has been reported.

For example, in a case where the flag is "1", it indicates that terminal 200 has successfully received the PDCCH that triggers the aperiodic terminal-to-terminal CLI measurement and report. In a case where the flag is "1", base station 100 specifies that the measurement value of the aperiodic terminal-to-terminal CLI is reported.

Meanwhile, in a case where the flag is "0", it indicates that terminal 200 has not successfully received the PDCCH that triggers the aperiodic terminal-to-terminal CLI measurement and report. In a case where the flag is "0", base station 100 specifies that the measurement value of the periodic/semi-persistent CSI/CLI is reported.

The meanings of "0" and "1" of the flag may be reversed.

According to Report Method 1, since the aperiodic terminal-to-terminal CLI report is transmitted by using the PUCCH resource for periodic/semi-persistent CSI/CLI report, base station 100 does not need to indicate, to terminal 200, the trigger field for measuring the aperiodic terminal-to-terminal CLI by the UE-specific DCI or the group common DCI and the information on the PUCCH resource for the aperiodic terminal-to-terminal CLI report by the UE-specific DCI or the group common DCI. Therefore, the number of bits of the UE-specific DCI or the group common DCI can be reduced.

### [Report Method 2]

The aperiodic terminal-to-terminal CLI report method using the PUCCH resource according to Report Method 2 is a method of reporting the aperiodic terminal-to-terminal CLI by using the PUCCH resource that is not for periodic/semi-persistent CSI/CLI report.

Terminal 200 transmits the aperiodic terminal-to-terminal CLI report by using the PUCCH resource that is not used for the periodic/semi-persistent CSI/CLI report.

The PUCCH resource used for the aperiodic terminal-to-terminal CLI report may be indicated by, for example, a PUCCH resource indicator included in the UE-specific DCI or the group common DCI. The PUCCH resource indicator may reuse, for example, the existing PUCCH resource indicator field or a new PUCCH resource indicator field may be introduced for the aperiodic terminal-to-terminal CLI report. The existing PUCCH resource indicator field is used, for example, for determining the PUCCH resource for reporting a hybrid automatic repeat request acknowledgement (HARQ-ACK) and is indicated by a DCI format 1_0/1_1/1_2. In a case where the existing PUCCH resource indicator field is reused for the aperiodic terminal-to-terminal CLI report, the aperiodic terminal-to-terminal CLI report may be multiplexed with HARQ-ACK.

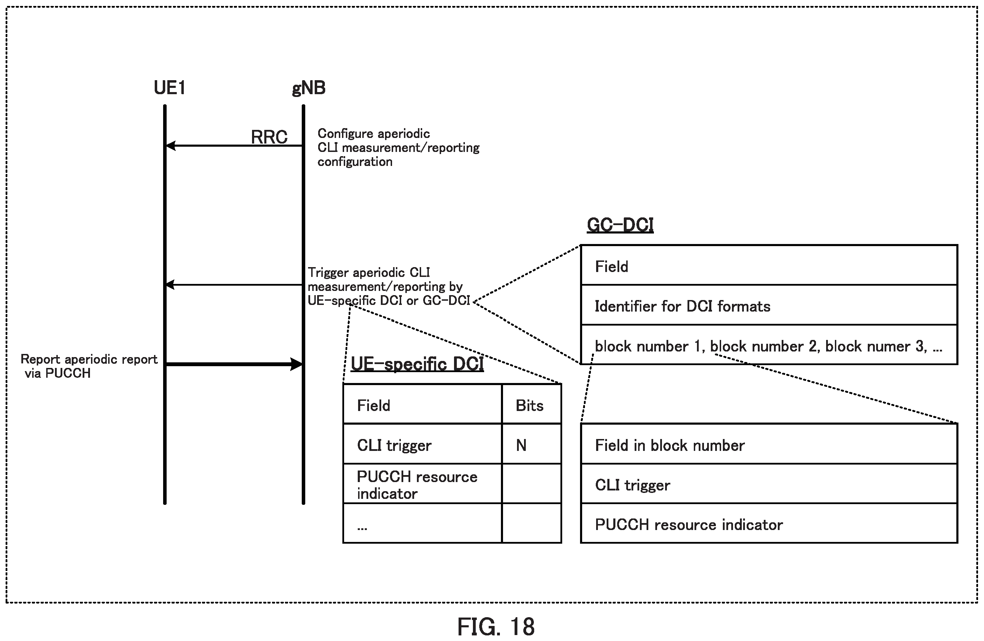

FIG. 18 illustrates an operation example of Report Method 2.

In FIG. 18, base station 100 may configure the configuration related to the aperiodic terminal-to-terminal CLI measurement and report to terminal 200 by RRC.

Further, base station 100 triggers the aperiodic terminal-to-terminal CLI measurement and report for terminal 200 by using the UE-specific DCI or the group common DCI. As illustrated in FIG. 18, the UE-specific DCI or the group common DCI may include a CLI trigger field for measuring the aperiodic terminal-to-terminal CLI and a PUCCH resource indicator field for the aperiodic terminal-to-terminal CLI report. For example, the PUCCH resource used for the aperiodic terminal-to-terminal CLI report is determined by the value of the PUCCH resource indicator field. For example, in a case where the PUCCH resource indicator field is "2", terminal 200 transmits the report by using the PUCCH resource of "PUCCH-ResourceId" of "2" in the PUCCH resource configuration configured by RRC.

According to Report Method 2, terminal 200 can transmit the aperiodic terminal-to-terminal CLI report by using another PUCCH resource different from the PUCCH resource for periodic/semi-persistent CSI/CLI report. Therefore, the report delay of the periodic, semi-persistent, and aperiodic CSI and CLI can be reduced. Further, since base station 100 does not need to indicate other information by the UE-specific DCI or the group common DCI in a case where the trigger field for measuring the aperiodic terminal-to-terminal CLI and the PUCCH resource indicator field are indicated by the UE-specific DCI or the group common DCI, the number of bits of the UE-specific DCI or the group common DCI can be reduced.

The embodiments of the present disclosure have been described above.

### (Other Embodiments)

[Regarding Priority of Report] In a case where two reports (e.g., a CSI report and a CLI report or two CLI reports) collide (e.g., in a case where the two reports need to be transmitted in the same resource at the same time) and the report resource (e.g., PUCCH or PUSCH) cannot include the collided report, terminal 200 drops the report having a low priority. Examples of the method of determining the priority include the following Options 1 to 3. One or a plurality of Options may be applied to terminal 200. For example, in a case where two CLI reports collide, Option 1 may be applied, and in a case where the CSI report and the CLI report collide, Option 3 may be applied. The priorities may be defined by the standard, may be configured in terminal 200 by RRC signaling, or may be indicated to terminal 200 by DCI. Terminal 200 drops the collided report according to the priority rule. For example, in a case where the aperiodic report of Option 1 has a higher priority than the periodic report and the aperiodic CLI report and the periodic CSI report collide and the aperiodic CLI report and the periodic CSI report cannot be assigned in the PUCCH or PUSCH resource (e.g., in a case where the number of bits is insufficient), terminal 200 drops the periodic CSI report according to the priority. Since base station 100 can specify which report collides, it can specify which report is dropped according to the priority.

### < Option 1>

In Option 1, the priority is determined by the periodic, aperiodic, or semi-persistent of the report. Examples thereof include a configuration in which the aperiodic report has a higher (or lower) priority than the periodic report or a configuration in which the semi-persistent report has a higher (or lower) priority than the periodic report.

### < Option 2>

In Option 2, the priority is determined by the value (e.g., SRS-RSRP or L1-RSRP) of the report. Examples thereof include a configuration in which SRS-RSRP or CLI-RSSI has a higher (or lower) priority than L1-RSRP or L1-SINR.

### <Option 3>

In Option 3, the priority is determined by the framework (e.g., CLI report or CSI report) of the report. Examples thereof include a configuration in which the CLI report has a higher (or lower) priority than the CSI report. Further, a configuration in which the priority of part 1 of the CSI report is higher than the priority of the CLI report and the priority of part 2 of the CSI report is lower than the priority of the CLI report is also possible.

As another case, even in a case where two reports (e.g., a CSI report and a CLI report or two CLI reports) collide and the report resource (e.g., PUCCH or PUSCH) can include the collided report, terminal 200 may assign the two collided reports to the report resource according to the priority rule. Further, in a case where the report resource cannot include the collided report, Option 1 may be applied, and in a case where the report resource can include the collided report, Option 3 may be applied. Terminal 200 assigns the collided report to the PUCCH or PUSCH resource according to the priority rule. Since base station 100 can specify which report collides, it can specify how and which report is assigned according to the priority.

### [MAC-CE based Report Method by PUSCH]

Each of the above-described embodiments is not limited to the layer 1-based report and can be applied to a report using PUSCH based on the medium access control (MAC) signaling. In the report using PUSCH based on the MAC signaling, the frequency of the report is reduced, but the number of transmittable bits increases.

### [Measurement and Report Method Using DL Grant]

The scheduling of the trigger of the aperiodic terminal-to-terminal CLI measurement or the periodic terminal-to-terminal CLI measurement report is not limited to the UL grant (e.g., DCI format 0_1 or the like), and a DL grant (e.g., DCI format 1_1 or the like) may be used. For example, the trigger field for the aperiodic terminal-to-terminal CLI measurement may be configured in DCI format 1_1, and the aperiodic terminal-to-terminal CLI measurement may be triggered for a specific terminal by using DCI format 1_1.

The configuration (e.g., the type of field, the number of bits, and the like) of the UE-specific DCI and the group common DCI used in the above-described embodiments and the type of parameter configured by RRC are only exemplary and are not limited. For example, the UE-specific DCI and the group common DCI may not include a part of the configuration used in each of the above-described embodiments or may include another field (not illustrated). Further, the DCI is not limited to the UE-specific DCI and the group common DCI, and may be other types of DCI.

Further, in each of the above-described embodiments, the PUSCH transmission and the PUCCH transmission have been described as an example of the UL transmission (transmission of CLI report), but the UL channel or the signal is not limited to PUSCH and PUCCH and may be other channels or signals.

### (Supplement)

Information indicating whether terminal 200 supports the functions, operations, or processes described in the above-described embodiments may be transmitted (or indicated) from terminal 200 to base station 100 as capability information or a capability parameter for terminal 200.

The capability information may include an information element (IE) individually indicating whether terminal 200 supports at least one of the functions, operations, or processes described in the above-described embodiments. Alternatively, the capability information may include an information element (IE) indicating whether terminal 200 supports a combination of any two or more of the functions, operations, or processes described in the above-described embodiments.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control the configuration of the terminal-to-terminal CLI report based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) related to the exemplary embodiment of the present disclosure may be a signal (or information) transmitted of a Physical Downlink Control Channel (PDCCH) in a physical layer, for example, or may be a signal (or information) transmitted through a Medium Access Control Control Element (MAC CE) of the higher layer or the Radio Resource Control (RRC). Further, the signal (or information) is not limited to being indicated by the downlink control signal, and may be predefined in the specifications (or standard) or may be pre-configured in a base station and a terminal.

In the present disclosure, the uplink control signal (or uplink control information) related to the exemplary embodiment of the present disclosure may be, for example, a signal (or information) transmitted through a PUCCH of the physical layer or a signal (or information) transmitted through a MAC CE of the higher layer or the RRC. Further, the signal (or information) is not limited to being indicated by the uplink control signal and may be specified by the specifications (or standards) in advance or may be preconfigured in a base station and a terminal. Further, the uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, an exemplary embodiment of the present disclosure may be applied to uplink channels such as Physical Uplink Shared Channel (PUSCH), Physical Uplink Control Channel (PUCCH), and Physical Random Access Channel (PRACH), downlink channels such as Physical Downlink Shared Channel (PDSCH), PDCCH, and Physical Broadcast Channel (PBCH), or sidelink channels such as Physical Sidelink Shared Channel (PSSCH), Physical Sidelink Control Channel (PSCCH), and Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of broadcast channels, and the PRACH is an example of a random access channel.

### (Data channel/Control channel)

One exemplary embodiment of the present disclosure may be applied to, for example, any of data channels and control channel. For example, the channels in an exemplary embodiment of the present disclosure may be replaced with any of data channels including PDSCH, PUSCH, and PSSCH and/or control channels including PDCCH, PUCCH, PBCH, PSCCH, and PSBCH.

### (Reference Signal)

In one exemplary embodiment of the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

### (Frequency Band)

One exemplary embodiment of the present disclosure may be applied to any of a licensed band and an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, one exemplary embodiment of the present disclosure may be applied to any of a terrestrial network or a network other than a terrestrial network (NTN: Non-Terrestrial Network) using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Antenna Port)

In one exemplary embodiment of the present disclosure, the antenna port refers to a logical antenna (antenna group) configured of one or more physical antennae. For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

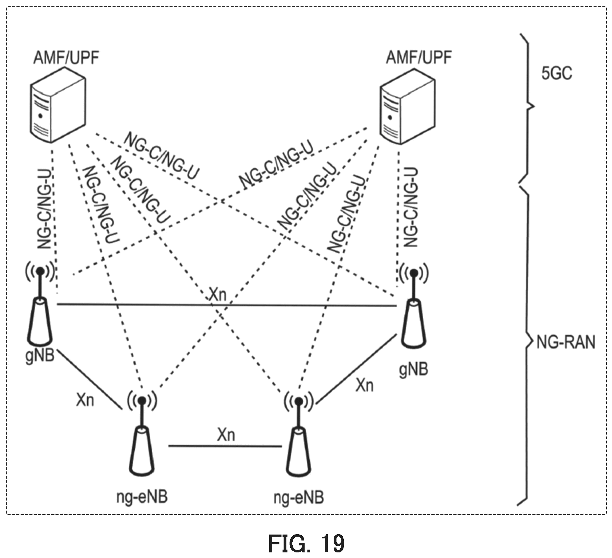

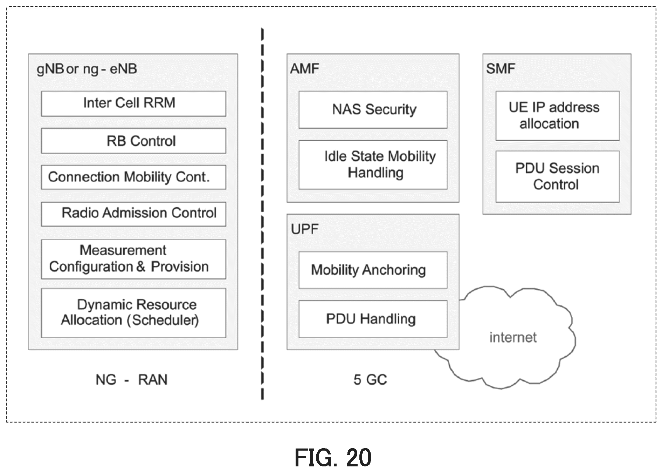

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 20 (see e.g., 3GPP TS 38.300 v15.6.0, section 4). FIG. 19 illustrates an NG-RAN architecture (e.g., see section 4 of 3GPP TS 38.300 v15.6.0).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is specified based on the frequency index in the frequency domain and the symbol position in the time domain (see 3GPP TS 38.211 v15.6.0).

### <5G NR Functional Split between NG-RAN and 5GC>

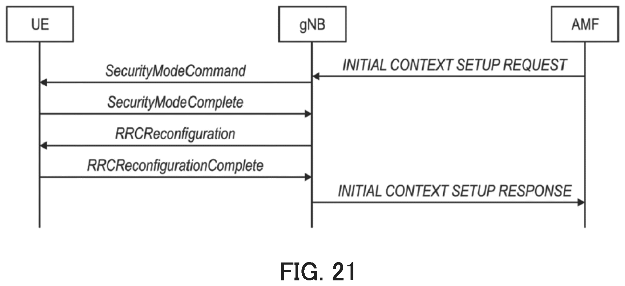

FIG. 21 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:
- Functions for radio resource management such as radio bearer control, radio admission control, connection mobility control, dynamic allocation (scheduling) of resources to UEs in both uplink and downlink;
- IP header compression, encryption, and integrity protection of data;
- Selection of an AMF at UE attachment when no routing to an AMF can be determined from the information provided by the UE;

- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual connectivity; and
- Tight interworking between NR and E-UTRA.

The access and mobility management function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:
- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g., packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:
- Session management;
- UE IP address allocation and management;
- Selection and control of UPF;
- Configuration function of traffic steering at a user plane function (UPF) to route traffic to proper destination;
- Control part policy enforcement and QoS; and
- Downlink data indication.

### <RRC Connection Setup and Reconfiguration Procedures>

FIG. 21 illustrates some interactions between a UE, gNB, and AMF (a 5GC entity) in the context of a transition of the UE from RRC_IDLE to RRC _CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and User Equipment (UE). In particular, the gNodeB transmits a Radio Resource Control (RRC) signaling containing a resource allocation configuration information element (IE) to the UE via the signaling radio bearer. The UE then performs an uplink transmission or a downlink reception based on the resource allocation configuration.

### <Usage Scenarios of IMT for 2020 and beyond>

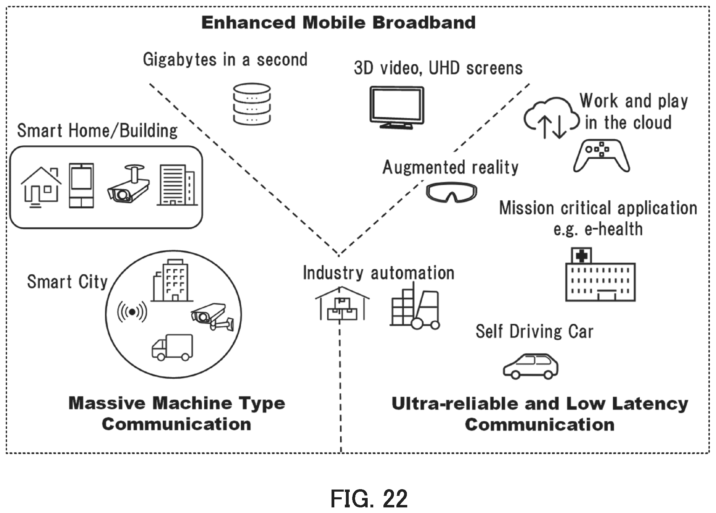

FIG. 22 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. Further to further extending the eMBB support, the current and future work would involve the standardization for ultra-reliable and low-latency communications (URLLC) and massive machine-type communications (mMTC). FIG. 22 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by specifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non-slot based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10⁻⁶ level), higher availability, packet size of up to 256 bytes, time synchronization down to the order of a few where the value can be one or a few µs depending on frequency range and short latency in the order of 0.5 to 1 ms (e.g., target user plane latency of 0.5 ms) depending on the use cases.

Moreover, for NR URLLC, several technology enhancements in terms of the physical layer perspective are possible. These technology enhancements include Physical Downlink Control Channel (PDCCH) enhancements related to compact DCI, PDCCH repetition, and increased PDCCH monitoring. Further, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements are possible. The term "mini-slot" refers to a transmission time interval (TTI) including a smaller number of symbols than a slot (a slot includes fourteen symbols).

### <QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. The QoS flow is specified within a PDU session by a QoS Flow ID (QFI) carried in an encapsulation header via the NG-U interface.

For each UE, the 5GC establishes one or more PDU sessions. For each UE, the NG-RAN establishes at least one Data Radio Bearer (DRB) matching with the PDU session, for example as illustrated above with reference to FIG. 22. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

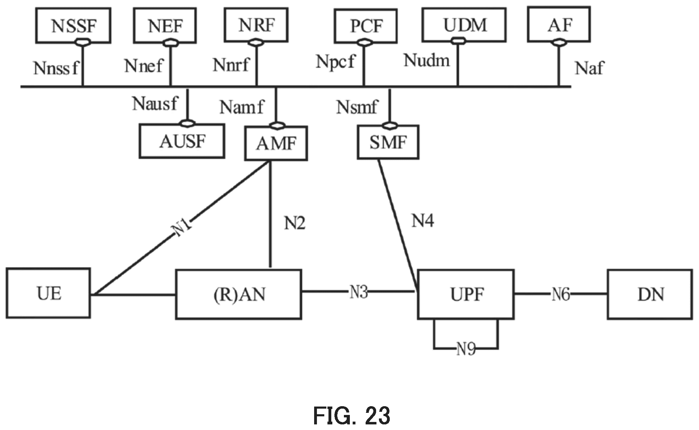

FIG. 23 illustrates a 5G NR non-roaming reference architecture (see TS 23.501 v16.1.0, section 4.23). Application Function (AF, e.g., an external application server hosting 5G services exemplified in FIG. 22) interacts with the 3GPP core network in order to provide services. For example, to support application giving influence on traffic routing, accessing Network Exposure Function (NEF) or interacting with the policy framework for policy control (see Policy Control Function, PCF), e.g., QoS control is performed. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 23 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture) is provided that includes a transmitter, which in operation, transmits a request containing a QoS requirement for at least one of the URLLC, eMMB, and mMTC services to at least one of functions (e.g., NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the configurations of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a communication function (collectively referred to as a communication apparatus). The communication apparatus may include a radio transmitter/receiver (transceiver) and processing/control circuitry. The transceiver may include and/or function as a receiver and a transmitter. The transceiver (transmitter/receiver) may include a Radio Frequency (RF) module and one or more antennas. The RF module may include an amplifier and an RF modulator/demodulator or components similar to these components. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one exemplary embodiment of the present disclosure includes: control circuitry, which, in operation, determines a resource used for an aperiodic report of a cross-link interference between terminals based on a method different from a method of triggering aperiodic measurement of the cross-link interference; and transmission circuitry, which, in operation, transmits the report by using the resource.

In one exemplary embodiment of the present disclosure, the resource is a resource of an uplink shared channel or a resource of an uplink control channel.

In one exemplary embodiment of the present disclosure, the resource of the uplink shared channel is indicated to the terminal by terminal-specific downlink control information.

In one exemplary embodiment of the present disclosure, the resource of the uplink shared channel is indicated to the terminal by downlink control information common to a plurality of terminals.

In one exemplary embodiment of the present disclosure, the downlink control information includes information that triggers the measurement of the cross-link interference and a parameter related to scheduling of the resource.

In one exemplary embodiment of the present disclosure, a plurality of candidates for a parameter related to scheduling of the resource is configured for the terminal by higher layer signaling, and the downlink control information includes information that triggers the measurement of the cross-link interference and identification information that identifies any one of the plurality of candidates.

In one exemplary embodiment of the present disclosure, a plurality of candidates for a parameter related to scheduling of the resource is configured for the terminal by higher layer signaling, and the downlink control information includes information that triggers the measurement of the cross-link interference, identification information that identifies any one of the plurality of candidates, and at least one parameter of the plurality of candidates.

In one exemplary embodiment of the present disclosure, information on the resource of the uplink shared channel is indicated to the terminal by terminal-specific downlink control information, information that triggers the measurement of the cross-link interference is indicated to the terminal by downlink control information common to a plurality of terminals, and the transmission circuitry transmits the report by using a resource at a defined timing among a plurality of the resources indicated by the terminal-specific downlink control information, after the measurement of the cross-link interference.

In one exemplary embodiment of the present disclosure, the resource of the uplink control channel is a resource used for a periodic or semi-persistent report of a channel state.

In one exemplary embodiment of the present disclosure, the resource of the uplink control channel is a resource different from a resource used for a periodic or semi-persistent report of a channel state.

A base station according to one exemplary embodiment of the present disclosure includes: control circuitry, which, in operation, determines a resource used for an aperiodic report of a cross-link interference between terminals based on a method different from a method of triggering aperiodic measurement of the cross-link interference; and reception circuitry, which, in operation, receives the report by using the resource.

A communication method according to one exemplary embodiment of the present disclosure includes: determining, by a terminal, a resource used for an aperiodic report of a cross-link interference between terminals based on a method different from a method of triggering aperiodic measurement of the cross-link interference; and transmitting, by the terminal, the report by using the resource.

A communication method according to one exemplary embodiment of the present disclosure includes: determining, by a base station, a resource used for an aperiodic report of a cross-link interference between terminals based on a method different from a method of triggering aperiodic measurement of the cross-link interference; and receiving, by the base station, the report by using the resource.

The disclosure of Japanese Patent Application No. 2023-128367, filed on August 7, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 201 Receiver
102, 202 Demodulator/decoder
103, 203 Configurator
104 Scheduler
105, 205 Control information storage
106, 206 Data/control information generator
107, 207 Encoder/modulator
108, 208 Transmitter
200 Terminal
204 Transmission controller

## Claims

1. A terminal, comprising:
control circuitry, which, in operation, determines a resource used for an aperiodic report of a cross-link interference between terminals based on a method different from a method of triggering aperiodic measurement of the cross-link interference; and
transmission circuitry, which, in operation, transmits the report by using the resource.

2. The terminal according to claim 1, wherein, the resource is a resource of an uplink shared channel or a resource of an uplink control channel.

3. The terminal according to claim 2, wherein, the resource of the uplink shared channel is indicated to the terminal by terminal-specific downlink control information.

4. The terminal according to claim 2, wherein, the resource of the uplink shared channel is indicated to the terminal by downlink control information common to a plurality of terminals.

5. The terminal according to claim 4, wherein, the downlink control information includes information that triggers the measurement of the cross-link interference and a parameter related to scheduling of the resource.

6. The terminal according to claim 4, wherein,
a plurality of candidates for a parameter related to scheduling of the resource is configured for the terminal by higher layer signaling, and
the downlink control information includes information that triggers the measurement of the cross-link interference and identification information that identifies any one of the plurality of candidates.

7. The terminal according to claim 4, wherein,
a plurality of candidates for a parameter related to scheduling of the resource is configured for the terminal by higher layer signaling, and
the downlink control information includes information that triggers the measurement of the cross-link interference, identification information that identifies any one of the plurality of candidates, and at least one parameter of the plurality of candidates.

8. The terminal according to claim 2, wherein,
information on the resource of the uplink shared channel is indicated to the terminal by terminal-specific downlink control information,
information that triggers the measurement of the cross-link interference is indicated to the terminal by downlink control information common to a plurality of terminals, and
the transmission circuitry transmits the report by using a resource at a defined timing among a plurality of the resources indicated by the terminal-specific downlink control information, after the measurement of the cross-link interference.

9. The terminal according to claim 2, wherein, the resource of the uplink control channel is a resource used for a periodic or semi-persistent report of a channel state.

10. The terminal according to claim 2, wherein, the resource of the uplink control channel is a resource different from a resource used for a periodic or semi-persistent report of a channel state.

11. A base station, comprising:
control circuitry, which, in operation, determines a resource used for an aperiodic report of a cross-link interference between terminals based on a method different from a method of triggering aperiodic measurement of the cross-link interference; and
reception circuitry, which, in operation, receives the report by using the resource.

12. A communication method, comprising:
determining, by a terminal, a resource used for an aperiodic report of a cross-link interference between terminals based on a method different from a method of triggering aperiodic measurement of the cross-link interference; and
transmitting, by the terminal, the report by using the resource.

13. A communication method, comprising:
determining, by a base station, a resource used for an aperiodic report of a cross-link interference between terminals based on a method different from a method of triggering aperiodic measurement of the cross-link interference; and
receiving, by the base station, the report by using the resource.
